# EUROPEAN PATENT APPLICATION

(11) **EP 1 649 997 A1**
(43) Date of publication of application: **26.04.2006**
(21) Application number: 05019963.7
(22) Date of filing: 14.09.2005
(51) Int. Cl.: B29C 41/06, B29C 41/46

(54) **Device and mold for rotational molding of plasic materials**

(30) Priority: 22.10.2004 IT MI20042018
(71) Applicant: Persico S.p.A., 24027 Nembro (BG) (IT)
(72) Inventor: Persico, Claudia, 24022 Alzano Lombardo BG (IT)
(74) Representative: Faraggiana, Vittorio

(57) **Abstract**

A rotational molding device comprises rotation means (11, 12) for a mold (13) and means (15) of feeding hot or cold fluids for heating or cooling the mold. The mold (13) has ducts (30) incorporated directly in its walls mold for the fluids.

## Description

This invention relates to a device and to a mold for rotational molding of plastic materials.

In the field of rotational molding the mold is commonly made up of a concave metal or reinforced resin shell openable in two or more parts that can be dismantled. The internal configuration of the shell is that intended for reproducing the plastic part. Plastic powder poured into the mold at the beginning of each production cycle is molten in the mold. Rotation of the mold around the two orthogonal axes causes homogeneous deposit of the heated plastic fluid on the inner wall of the mold. The ensuing cooling of the mold consolidates the plastic material in the form thus taken on.

The air heating system commonly used in rotational molding of the plastic material makes clear the limits that are represented by the high power consumption related to its efficacy. The air, indeed, lends itself ill to thermal conduction. The exchange by convection on the outer surface of the metallic rotational molds is slow and it is especially difficult to ensure homogeneousness of the distribution of heat on the different parts of the mold, which is an essential technique for molding plastic parts with homogeneous thicknesses.

Oil heating systems have also been proposed but have shown some criticality consisting of the fact that in such known systems the oil circulates through an air space or channeling outside of the mold to create sealing problems between the two parts due to their different expansion during sudden temperature changes. Limitations are also the greater quantity of diathermic oil necessary for ensuring heat exchange with resulting rise in energy and/or cycle time costs. Even known solutions with oil make temperature control difficult with special concern for the homogenous distribution of heat in the various parts of the mold.

The general purpose of this invention is to remedy the above mentioned shortcomings by making available a rotational molding device and mold incorporating ducts in the mold walls and capable of making the heated or cooled fluid circulate efficiently and rapidly.

In view of this purpose it was sought to provide in accordance with this invention a rotational molding device comprising rotation means for a mold and means of feeding hot or cold fluids for heating or cooling the mold and characterized in that the mold has ducts incorporated in the walls of the mold for said fluids.

This invention also relates to a mold for rotational molding characterized in that it is equipped with ducts incorporated in its walls for cooling or heating fluids.

To clarify the explanation of the innovative principles of this invention and its advantages compared with the prior art there is described below with the aid of the annexed drawings a possible embodiment thereof by way of non-limiting example applying said principles. In the drawings:
FIG 1 shows a diagrammatic view of a rotational molding device realized in accordance with the principles of this invention, and
FIG 2 shows a diagrammatic view of a fluid feeding circuit of the device of FIG 1.

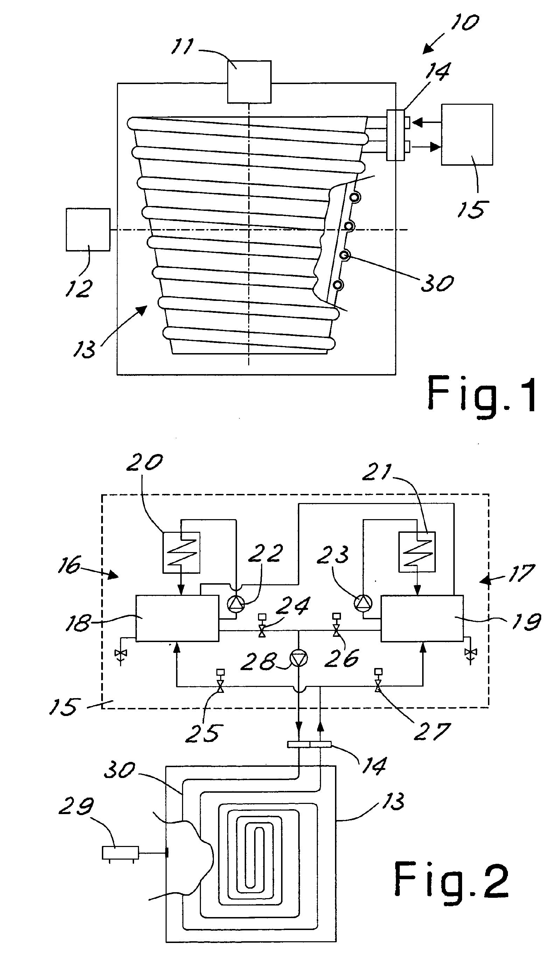

With reference to the figures, FIG 1 shows diagrammatically a rotational molding device designated as a whole by reference number 10 and comprising a system for movement along orthogonal axes by known powered means 11, 12 for rotation of a mold 13. The handling system is essentially prior art and therefore readily imaginable to those skilled in the art. For this reason it is not further described nor shown.

By means of known rotating joints 14 that allow passage of the fluid between two parts of the frame in reciprocal movement a heating or cooling fluid feeding unit 15 sends the appropriate fluid to the mold 13 to condition its temperature in accordance with the requirements of the mold. The fluid can be for example oil, steam or water with or without glycol.

As may be seen again diagrammatically in FIG 1 it is the mold that is realized with fluid ducts 30 incorporated directly in the mass of its walls. This can be obtained by means of co-founding of piping or compatible material in the mold. Aluminum was found to be advantageous material.

Of course other known techniques can be adopted such as for example 'metal spray', appropriately treated resins, welding, drilling and milling et cetera. Obtaining the mold by means of machining with material removal for example with CNC machines was found very advantageous.

The use of ducts directly in the mass of the mold gives good thermal conduction with contact. In addition, it is possible to distribute the thermal heat exchange on the different parts of the mold in the most appropriate manner, increasing or decreasing the tubing distribution density on the mold and adopting tubing of ideal thickness and material and an appropriate pitch between one piping and the other. The problem of hydraulic seal of the circulation circuit is also completely avoided.

In accordance with the principles of this invention it was found advantageous that the circulation tubing have the fluid access and outlet holes positioned at a few centimeters apart and that the fluid delivery and return sections be arranged in alternating positions so as to compensate on the mold surface for the progressive cooling of the fluid during baking and progressive heating during the solidification step as a consequence of the thermal exchange with the mold.

The arrangement of the tubing in alternating order between the delivery and return sections of the heating and cooling fluids of the mold (as seen diagrammatically in FIG 2) achieves the purpose of balancing the temperature gap between the delivery and returning fluid.

In particular, for the tubing realized with material different from that of the mold it might be advantageous to adopt a not rectilinear path on the mold wall and create curves that allow compensation of the different expansion coefficients of the metals during the heating and cooling steps.

By using the same piping it is possible to both heat and cool the mold.

By using in accordance with this invention the ducts incorporated in the mold and therefore in close contact with the mold the volumes of fluid in circulation in the ducts can be much reduced and it is thus possible to limit the time for replacement of the heated fluid with the refrigerated fluid and vice versa or make the thermal exchanges faster and speeding up the molding cycle.

FIG 2 shows an embodiment of the mold conditioning unit 15 found particularly advantageous.

As may be seen in FIG 2 the conditioning unit is equipped with two separate hot and cold circuits 16, 17 with independent circulation and exchanging between them only a small amount of fluid between the cycle starting step and the end of the previous one. The circuit 16 keeps the heated fluid at an optimal temperature while the circuit 17 keeps its own fluid cooled for the mold cooling step.

The hot fluid circuit 16 keeps at the same temperature a reserve greater than the amount exchanged with the mold during the molding step. For this purpose the circuit comprises a tank 18 of fluid that is heated by a known system for example electrical with an exchanger 20 and an associated circulation pump 22. The reserve is advantageously approximately 5 to 25 times and advantageously 10 to 15 times the amount exchanged with the mold at each molding cycle.

The cooling circuit can be realized with a simple water exchanger.

As an alternative as shown in FIG 2 the cold fluid circuit 17 can also be advantageously fitted with a reserve tank 19 with a quantity of cold fluid greater than that necessary for cooling of the mold at each cooling cycle. For cooling of the fluid in the tank a known cooling circuit comprising an exchanger 21 and a circulation pump 23 can be used.

The two circuits will comprise a known control system (not shown) for keeping the two fluid masses in the tanks at the desired temperature.

The two circuits 16 and 17 are connected to the mold circulation delivery and return circuit by means of electromagnetic valves 24, 25 and 26, 27 respectively. A circulation pump 28 is provided on the delivery.

In this manner the system, instead of having to cool the entire mass of circulating fluid to then have to heat it again, has at its disposal immediately two masses for energy exchange, one hot and one cold and always at the desired temperature while reducing optimal temperature restoration times for the heating and cooling fluids.

In the prior art, rotational molds have a vent through which compensation of the air pressures and depressions takes place in the plastic part in the molding step as a consequence of its heating and consequent cooling. Absence of the vent can cause air bubbles in the plastic part especially near the mold separation line. Depression in the cooling step also entails the probability of deformation of the plastic part whose walls are sucked inward.

In prior art the vent is commonly realized with a section of tube passing in the mold wall. Inside the tube there is rock wool or ceramic fiber for the purpose of opposing any outlet of the plastic during the mold rotation steps and at the same time allowing passage of air. This technique entails the recurring manual cleaning of the vent and replacement with clean rock wool of that dirtied by the plastic material.

In accordance with one detail of this invention, the conventional vent is replaced on the rotational mold with a decompression valve 29 (for example like a goblet) allowing keeping the mold under pressure during the heating step so that the fluid plastic material is compacted by the pressure towards the mold walls. Opening of the valve at the beginning of the cooling step avoids the plastic part going into depression and being deformed.

It was found that control of the internal pressure of the mold by means of the valve 29 allows raising the firmness of the plastic material thickness and the reproduction fidelity of the mold figure compared with the molds provided with conventional vents. The type of valve adopted also avoids having to perform the recurring cleaning of the vent and replacement of the filter materials manually.

It is now clear that the preset purposes have been achieved by making available a simple and reliable rotational molding device with improved performance compared with the

### prior art.

Naturally the above description of an embodiment applying the innovative principles of this invention is given by way of non-limiting example of said principles within the scope of the exclusive right claimed here. For example, the device will comprise all those known members for loading and unloading the mold. The mold can have any desired shape.

## Claims

1. Rotational molding device comprising rotation means (11, 12) for a mold (13) and means (15) of feeding hot or cold fluids for heating or cooling the mold **characterized in that** the mold (13) has ducts (30) incorporated in the walls of the mold for said fluids.

2. Device in accordance with claim 1 **characterized in that** the ducts are incorporated in the casting of the mold.

3. Device in accordance with claim 1 **characterized in that** the mold is obtained by machining with material removal.

4. Device in accordance with claim 1 **characterized in that** the mold is of aluminum.

5. Device in accordance with claim 1 **characterized in that** the ducts (30) are arranged in alternating order between a delivery section and a return section of the heating and cooling fluids of the mold in the sense of balancing the temperature difference between the delivered and returned fluid.

6. Device in accordance with claim 1 **characterized in that** the ducts are realized in material different from that of the mold and follow a non-rectilinear route on the mold wall to create curves allowing compensation of the different expansion coefficients of the materials during the heating and cooling steps.

7. Device in accordance with claim 1 **characterized in that** it comprises an alternating controlled circulation unit (15) for hot fluid and cold fluid in the ducts incorporated in the mold walls.

8. Device in accordance with claim 6 **characterized in that** the supply unit (15) has a heating circuit (16) fitted with a reserve tank (18) containing fluid kept hot at a predetermined temperature to be circulated as required in the mold ducts.

9. Device in accordance with claim 7 **characterized in that** the reserve tank (18) has a capacity of 5 to 25 times the quantity of hot fluid exchanged with the mold in each molding cycle.

10. Device in accordance with claim 7 **characterized in that** the reserve tank (18) has a capacity of 10 to 15 times.

11. Device in accordance with claim 6 **characterized in that** the feeding unit has a cooling circuit (17) fitted with a reserve tank (19) containing a fluid kept cold at a predetermined temperature to be circulated as required in the mold ducts.

12. Device in accordance with claim 1 **characterized in that** it comprises a controlled valve (29) for decompression of the mold and of the molded part in it.

13. Device in accordance with claim 11 **characterized in that** the valve is operated in the neighborhood of the beginning of circulation of the cooling fluid in the molding cycle.

14. Rotational molding mold **characterized in that** it is equipped with cooling or heating fluid ducts (30) incorporated in its walls.

15. Mold in accordance with claim 13 **characterized in that** the ducts are incorporated in the casting.

16. Mold in accordance with claim 14 **characterized in that** it is made of aluminum.
